# EUROPÄISCHE PATENTSCHRIFT

(11) **EP 2 907 819 B1**
(45) Veröffentlichungstag und Bekanntmachung des Hinweises auf die Patenterteilung: **07.03.2018**
(21) Anmeldenummer: 15153040.9
(22) Anmeldetag: 29.01.2015
(51) Int. Cl.: C07F 9/6574

(54) **Verfahren zur Herstellung von 6,6'-((3,3'-di-tert-butyl-5,5'-dimethoxy-[1,1'-biphenyl]-2,2'-diyl)bis(oxy))bis(2,4,8,10-tetramethyldibenzo[d,f][1,3,2]dioxaphosphepin**
Method for the preparation of 6,6'-((3,3'-di-tert-butyl-5,5'-dimethoxy-[1,1'-biphenyl]-2,2'-diyl)bis(oxy))bis(2,4,8,10-tetramethyldibenzo[d,f][1,3,2]dioxaphosphepin
Procédé de fabrication de 6,6'-((3,3'-di-tert-butyl-5,5'-diméthoxy-[1,1'-biphényl]-2,2'-diyl)bis(oxy))bis(2,4,8,10-tétraméthyldibenzo[d,f][1,3,2]dioxaphosphépine

(30) Priorität: 12.02.2014 DE 102014202499
(43) Veröffentlichungstag der Anmeldung: 19.08.2015
(73) Patentinhaber: Evonik Degussa GmbH, 45128 Essen (DE)
(72) Erfinder: Dyballa, Katrin Marie, 45657 Recklinghausen (DE); Franke, Robert, 45772 Marl (DE)

(56) Entgegenhaltungen:
- CN-A- 101 684 130

## Beschreibung

Die Erfindung betrifft ein Verfahren zur Herstellung von 6,6'-((3,3'-di-tert-butyl-5,5'-dimethoxy-[1,1'-biphenyl]-2,2'-diyl)bis(oxy))bis(2,4,8,10-tetramethyldibenzo[d,f][1,3,2] dioxaphosphepin.

Phosphorhaltige Verbindungen spielen als Liganden in einer Vielzahl von Reaktionen eine entscheidende Rolle. Hierzu zählen Phosphitliganden, also Verbindungen, die P-O-Bindungen enthalten, die in der Hydrierung, Hydrocyanierung und vor allem in der Hydroformylierung Anwendung finden.

Die Reaktionen zwischen Olefinverbindungen, Kohlenmonoxid und Wasserstoff in Gegenwart eines Katalysators zu den um ein C-Atom reicheren Aldehyden ist als Hydroformylierung bzw. Oxierung bekannt. Als Katalysatoren in diesen Reaktionen werden häufig Verbindungen der Übergangsmetalle der VIII. Gruppe des Periodensystems der Elemente verwendet. Bekannte Liganden sind beispielsweise Verbindungen aus den Klassen der Phosphine, Phosphite und Phosphonite mit jeweils dreiwertigen Phosphor P^{III}. Eine gute Übersicht über den Stand der Hydroformylierung von Olefinen findet sich in B. CORNILS, W. A. HERRMANN, "Applied Homogeneous Catalysis with Organometallic Compounds", Vol. 1 & 2, VCH, Weinheim, New York, 1996 bzw. R. Franke, D. Selent, A. Börner, "Applied Hydroformylation", Chem. Rev., 2012, DOI:10.1021/cr3001803. CN 101684130 A offenbart ein Verfahren zur Herstellung von Phosphorsäureester. Literaturbekannt ist die Synthese symmetrisch aufgebauter Bisphosphite, wie sie beispielsweise in US 4,769,498 offenbart wurden, und deren Verwendung in katalytisch aktiven, übergangsmetallhaltigen Zusammensetzungen zur Hydroformylierung ungesättigter Verbindungen.

In US 4,769,498, wie auch in US 5,723,641 werden bevorzugt symmetrisch aufgebaute Bisphosphite hergestellt und als Liganden zur Hydroformylierung verwendet. Die in der Hydroformylierung verwendeten symmetrisch aufgebauten Bisphosphitliganden werden bei tiefen Temperaturen hergestellt. Die Einhaltung dieser tiefen Temperaturen ist zwingend erforderlich, da höhere Temperaturen gemäß dieser US-Schriften zu Umlagerungen und letztlich zu unsymmetrisch aufgebauten Bisphosphiten führen würde, was aber hier nicht erwünscht ist.

Symmetrisch aufgebaute Bisphosphite weisen bei der Verwendung als Ligand in der übergangsmetallkatalysierten Hydroformylierung in der Regel deutlich höhere Reaktivitäten und eine größere n-Regioselektivität auf (siehe in Rhodium-catalyzed Hydroformylation, ed. by P.W.N.M. van Leeuwen et C. Claver, Kluwer Academic Publishers 2006, AA Dordrecht, NL, Seite 45-46).

Im Stand der Technik sind Möglichkeiten zur Herstellung von symmetrischen Liganden beschrieben. Hierbei werden jedoch in der Regel Mischungen aus symmetrischen und unsymmetrischen Liganden erhalten. Kleine Mengen dieser Gemische lassen sich beispielsweise über eine entsprechende Säulenchromatographie auftrennen. Für größere Produktmengen und eine großtechnische Anwendung sind diese Auftrennungsverfahren jedoch nicht praktikabel.

Die direkte Herstellung des reinen 6,6'-((3,3'-di-tert-butyl-5,5'-dimethoxy-[1,1'-biphenyl]-2,2'-diyl)bis(oxy))bis(2,4,8,10-tetramethyldibenzo[d,f][1,3,2]dioxaphosphepin) (**I**) gelingt bisher nicht, da während der Reaktion eine Umesterung zum unsymmetrischen 4,8-di-tert-butyl-2,10-dimethoxy-6-((3,3',5,5'-tetramethyl-2'-((2,4,8,10-tetramethyldibenzo[d,f] [1,3,2]dioxaphosphepin-6-yl)oxy)-[1,1'-biphenyl]-2-yl)oxy)dibenzo[d,f][1,3,2] dioxaphosphepin (**II**) stattfindet.

Die Aufgabe der Erfindung bestand darin, ein Verfahren bereitzustellen mit welchem die Verbindung 6,6'-((3,3'-di-tert-butyl-5,5'-dimethoxy-[1,1'-biphenyl]-2,2'-diyl)bis(oxy))bis (2,4,8,10-tetramethyldibenzo[d,f][1,3,2]dioxaphosphepin) (**I**) hergestellt werden kann. Hierbei solle der Anteil an 4,8-di-tert-butyl-2,10-dimethoxy-6-((3,3',5,5'-tetramethyl-2'-((2,4,8,10-tetramethyldibenzo[d,f][1,3,2]dioxaphosphepin-6-yl)oxy)-[1,1'-biphenyl]-2-yl)oxy) dibenzo[d,f][1,3,2]dioxaphosphepin (**II**) im Endprodukt möglichst gering sein.

Es sollte vorzugsweise die Möglichkeit einer großtechnischen Anwendung bestehen. Daher sollte auf Verfahren wie beispielsweise eine säulenchromatografische Trennung, die in der Großproduktion nicht realisierbar ist, verzichtet werden.

Die Aufgabe wird gelöst durch ein Verfahren nach Anspruch 1.

Verfahren zur Herstellung einer Verbindung gemäß der Formel (**I**): 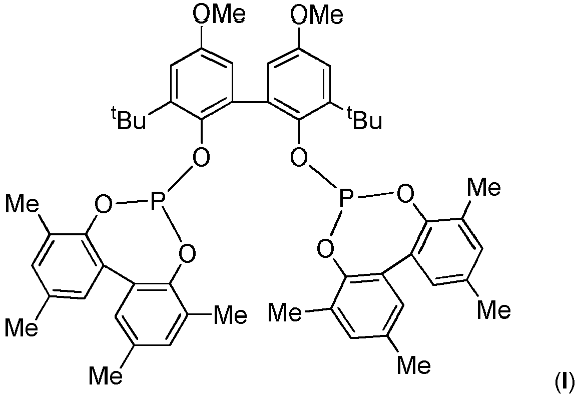 umfassend die Verfahrensschritte:
a) Umsetzung von 3, 3', 5, 5'-Tetramethyl-2,2'-dihydroxybiphenyl mit PCl₃ zu einem Phosphorochloriditderivat unter Inertgasatmosphäre;
b) Umsetzung von zumindest 2 Äquivalenten des Phophorochloriditderivats aus a) mit 1 Äquivalent 5, 5'-Dimethoxy-3,3'-di-tert.-butyl-2, 2'-dihydroxybiphenyl unter Inertgasatmosphäre zu einem Rohprodukt; wobei die Umsetzung im Verfahrensschritt b) unter Zusatz mindestens einer Base erfolgt, welche ausgewählt ist aus: Triethylamin, Dimethylaminopyridin, Pyridin, Tributylamin; und wobei als Lösungsmittel Acetonitril verwendet wird;
c) Zugabe eines Lösungsmittel oder eines Lösungsmittelgemisches, welches zumindest eines der Lösungsmittel umfasst ausgewählt aus: o-Xylol, Toluol, Methanol (MeOH), Ethanol (EtOH), Butanol (BuOH), iso-Propanol (iPrOH) zum Rohprodukt aus b), so dass ein Gemisch erhalten wird;
d) Erwärmen des Gemisches aus c), so dass sich das Rohprodukt löst und eine Lösung erhalten wird;
e) Abkühlen der Lösung aus d), wodurch die Verbindung gemäß der Formel (**I**) ausfällt;
f) Abfiltrieren der Verbindung gemäß der Formel (**I**).

In einer Variante des Verfahrens werden die Verfahrensschritte c) bis f) wiederholt.

In einer Variante des Verfahrens erfolgt das Abkühlen in Verfahrensschritt e) auf Raumtemperatur.

In einer Variante des Verfahrens wird in Verfahrensschritt c) als Lösungsmittel o-Xylol verwendet.

In einer Variante des Verfahrens wird das Gemisch im Verfahrensschritt d) auf eine Temperatur im Bereich von 80 °C bis 140 °C erwärmt.

Vorzugsweise auf eine Temperatur in dem Bereich von 90 °C bis 110 °C.

Vorzugsweise wird das Gemisch während des Erwärmens gerührt.

### Allgemeine Reaktionsgleichung

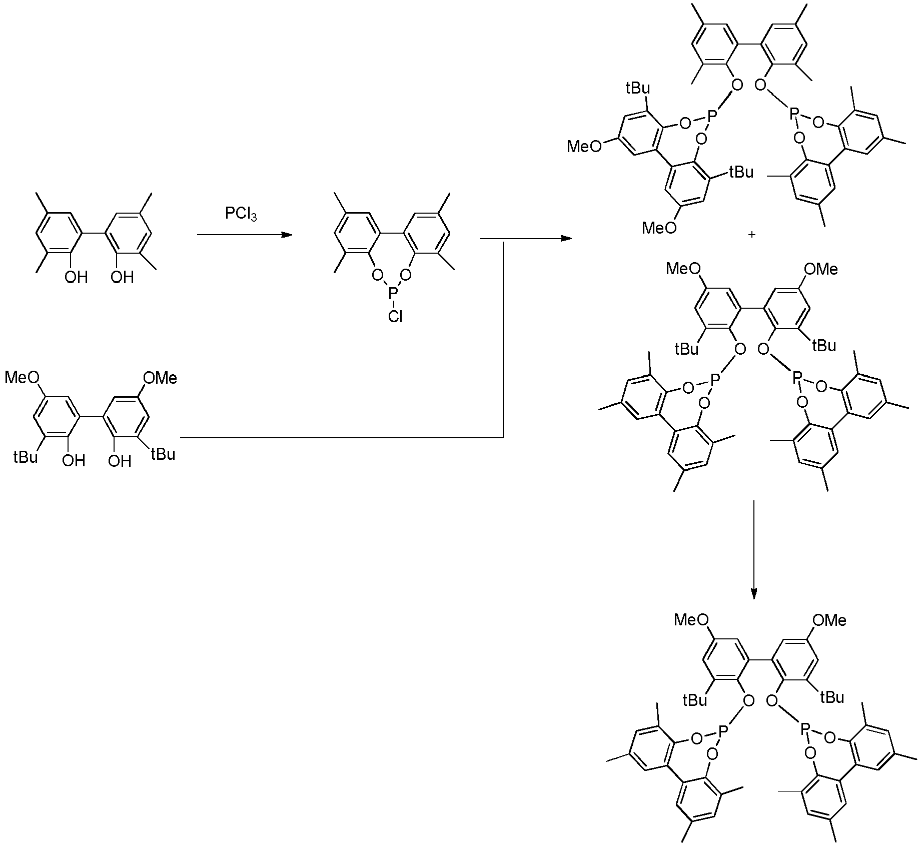

### Allgemeine Arbeitsvorschriften

Alle nachfolgenden Präparationen wurden mit Standard-Schlenk-Technik unter Schutzgas durchgeführt. Die Lösungsmittel wurden vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009).

Die Charakterisierung des Produktes erfolgte mittels NMR-Spektroskopie (Bruker Avance 500 MHz FT-NMR-Spektrometer). Chemische Verschiebungen werden in ppm angegeben. Die Referenzierung der 31P-NMR-Signale erfolgte gemäß: SR_{31P} = SR_{1H} * (BF_{31P} / BF_{1H}) = SR_{1H} * 0,4048. (Robin K. Harris, Edwin D. Becker, Sonia M. Cabral de Menezes, Robin Goodfellow, and Pierre Granger, Pure Appl. Chem., 2001, 73, 1795 - 1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84). Mittels der 31P-NMR wurde das Verhältnis der beiden Liganden zueinander bestimmt. Der unsymmetrische Ligand wird durch zwei Phosphorsignale charakterisiert, wohingegen für den symmetrischen Liganden nur ein Phosphorsignal zu erwarten ist.

### Synthese des 2,2'-Bis-(3,5-dimethylphenol)chlorophosphits

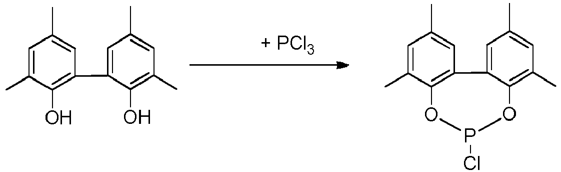

In einem sekurierten 2 L Schlenkkolben mit Magnetrührer wurden 440 ml (692.56 g) Phosphortrichlorid vorgelegt. In einem zweiten sekurierten 1 L Schlenkkolben wurden 120 g 2,2'-Bis-(3,5-dimethylphenol) eingewogen und unter Rühren 500 ml getrocknetes Toluol hinzugefügt. Die Biphenol-Toluol-Suspension wurde innerhalb von 4 h bei 63 °C zum Phosphortrichlorid dosiert. Nach vollständiger Zugabe wurde die Reaktionsmischung über Nacht bei Temperatur gerührt. Am nächsten Morgen wurde die Lösung in der Wärme (45 °C) eingeengt und das Produkt konnten in 96,5%iger Ausbeute (153 g) erhalten werden. ³¹P-NMR: 175,59 (94,8% 2,2'-Bis-(3,5-dimethylphenol)chlorophosphit), 4,4% diverse PCI-Verbindungen, 0,8% P-H-Verbindung.

### Herstellung des Isomerengemisches, aus den Verbindungen (I) und (II):

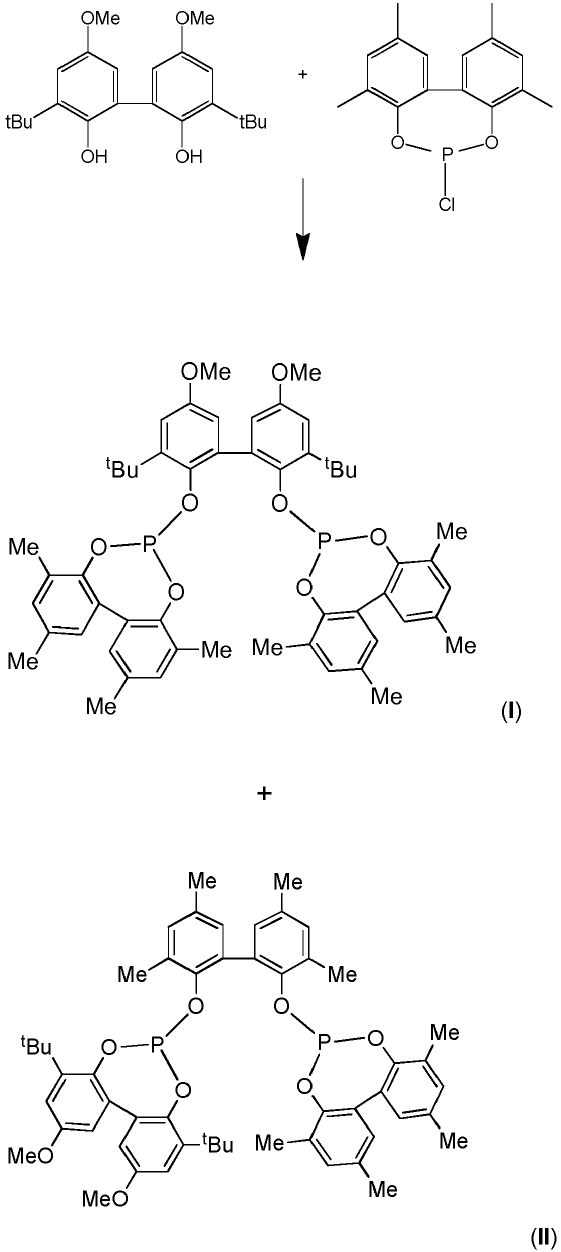

### Allgemeine Vorschrift:

In einem 1000 ml Schlenkkolben wurde unter Schutzgas 38,75 g (0,121 mol) 2,2'-Bis-(3,5-dimethylphenyl)chlorophosphit in 150 ml entgastem Acetonitril (ACN) gelöst und auf 45 °C erwärmt. In einem zweiten Schlenkkolben (500 ml) wurden 20,1 g (0,056 mol) 3,3'-Di-tert.-butyl-5,5'-dimethoxy-[1,1'-biphenyl]-2,2'diol in 150 ml entgastem ACN gelöst und unter Rühren mit der entsprechenden Base (die verwendete Menge wird auf das Chlorophosphit bezogen) versetzt. Dann wurde langsam die Biphenol/Basen-Lösung zu der Chlorophosphitlösung getropft. Nach einer Nachreaktionszeit von 1h wurde die Reaktionslösung über Nacht bei 45 °C gerührt. (Anderweitige Temperaturen oder Reaktionszeiten sind den Tabellen zu entnehmen.)

Anschließend wurde die Lösung filtriert und der Feststoff mit 100 ml warmen (45 °C) ACN gewaschen. Das Zielprodukt konnte als weißer Feststoff (Ausbeute in %) erhalten werden.

³¹P-NMR (202,4 MHz, toluene-d₈): 142,5 und 140,9 (Verbindung (**II**)), 139,2 (Verbindung (**I**)).

**Tabelle 1: Variation der Temperatur (und Basenmenge)**

| Temperatur | Äquivalent Base | Base | Verbindung (**II**) [%] | Verbindung (**I**) [%] | Ausbeute in [%] |
|---|---|---|---|---|---|
| 45 °C | 2,5 | DMAP | 46,6 | 53,4 | 51 |
| 0 °C | 2 | DMAP | 42,7 | 57,3 | 50 |
| 5 °C | 2 | DMAP | 47,8 | 52,2 | 89 |
| 45 °C | 2 | DMAP | 65,0 | 35,0 | 90 |

**Tabelle 2: Variation des Basenverhältnisses**

| Temperatur | Basen | Verhältnis | Verbindung (**II**) [%] | Verbindung (**I**) [%] | Ausbeute in [%] |
|---|---|---|---|---|---|
| 45 °C | Pyr/NEt₃ | 4:1 | 78,2 | 21,8 | 56 |
| 45 °C | Pyr/NEt₃ | 4:0,5 | 59,6 | 40,4 | 87 |
| 45 °C | Pyr/NEt₃ | 4:0,25 | 59,7 | 40,3 | 80 |
| 45 °C | Pyr/NEt₃ | 3:0,5 | 62,5 | 37,5 | 81 |
| 45 °C | Pyr/NEt₃ | 2:0,5 | 69,0 | 31,0 | 84 |
| 45 °C | Pyr/NBu₃ | 2:0,5 | 72,4 | 27,6 | 78 |

| | | | | | |
|---|---|---|---|---|---|
| NBu₃: Tributylamin NEt₃: Triethylamin Pyr: Pyridin DMAP: Dimethylaminopyridin | | | | | |

### Vorschrift zur Isolierung der Verbindung (I) aus einem Gemisch von (I) und (II)

Im ersten Schritt werden unter Argon 58 g das Gemisch aus (**I**) und (**II**) in einem 1 I Schlenkkolben eingewogen, 450 ml entgastes o-Xylol zugegeben und 2 h bei 110 °C gerührt. Dabei löst sich die Hauptmenge Feststoff auf. Die Mixtur wird dann unter Rühren über Nacht auf Raumtemperatur (RT) gebracht. Die angefallene Menge Feststoff filtriert man ab und wird getrocknet.
Menge Feststoff: 30 g entspricht 52 %.
Gehalt an (**I**) bestimmt durch ³¹P-NMR: 139,2 (75,2 %)
Gehalt (**II**) bestimmt durch ³¹P-NMR: 142,5 und 140,9 (20,0 %)
sowie weitere Hydrolyse- und Ligandenabbauprodukte.

Im zweiten Schritt werden 14,8 g des Feststoffes aus dem ersten Schritt unter Argon in einem 500 ml Schlenkkolben eingewogen, 80 ml entgastes o-Xylol zugegeben und 1,5 h bei 100 °C gerührt. Dabei löst sich die Hauptmenge Feststoff auf. Die Mixtur wird dann unter Rühren über Nacht auf Raumtemperatur gebracht. Die angefallene Menge Feststoff wird filtriert und getrocknet.
Menge Feststoff: 9,8 g entspricht 66 %.
Gehalt an (**I**) bestimmt durch ³¹P-NMR: 139,2 (92,2 %)

Die Verbindung (**II**) konnten nicht mehr nachgewiesen werden. Der Rest (7,8 %) waren lediglich Hydrolyse- oder Ligandenabbauprodukte (wie Oxide).

Sollte nach dem zweiten Schritt immer noch Restmengen an Verbindung (**II**) enthalten sein, kann der zweite Schritt nochmals wiederholt werden (= dritter Schritt).

### Analytischer Nachweis der Verbindung (I)

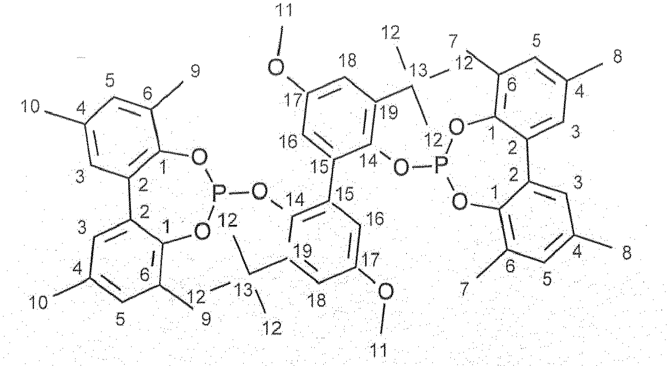

**Tabelle 1: Zuordnung der Signale zu den Atomen in 6,6'-((3,3'-di-tert-butyl-5,5'-dimethoxy-[1,1'-biphenyl]-2,2'-diyl)bis(oxy))bis(2,4,8,10-tetramethyldibenzo [d,f][1,3,2]dioxaphosphepin)**

| **Nummer** | **d**-¹H **/ ppm** | **d-¹³C / ppm** |
|---|---|---|
| **1** | - | 145,4 |
| **2** | - | 133,5 |
| **3** | 7,01 | 128,0 |
| **4** | - | 130,0 |
| **5** | 6,88 | 130,9 |
| **6** | - | 146,1 |
| **7 \| 8 \| 19 \| 10** | 1,99 \| 2,28 \| 2,32 | 16,7 \| 16,9 \| 20,7 \| 20,8 |
| **11** | 3,77 | 55,5 |
| **12** | 1,14 | 29,9 |
| **13** | - | 35,2 |
| **14** | - | 145,4 |
| **15** | - | 130,5 |
| **16** | 6,83 | 113,5 |
| **17** | - | 154,8 |
| **18** | 6,93 | 115,1 |
| **19** | - | 143,2 |

## Patentansprüche

1. Verfahren zur Herstellung einer Verbindung gemäß der Formel (I): 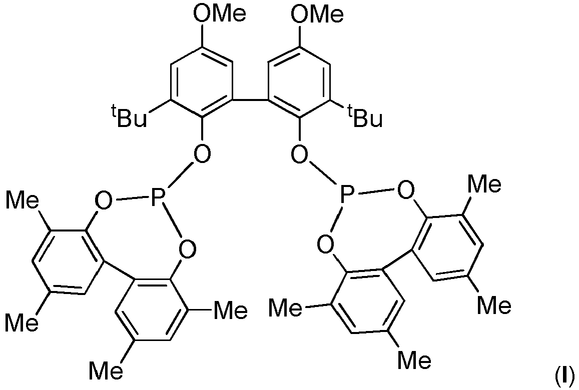 umfassend die Verfahrensschritte:
a) Umsetzung von 3, 3', 5, 5'-Tetramethyl-2,2'-dihydroxybiphenyl mit PCl₃ zu einem Phosphorochloriditderivat unter Inertgasatmosphäre;
b) Umsetzung von zumindest 2 Äquivalenten des Phophorochloriditderivats aus a) mit 1 Äquivalent 5, 5'-Dimethoxy-3, 3'-di-tert.-butyl-2, 2'-dihydroxybiphenyl unter Inertgasatmosphäre zu einem Rohprodukt;
wobei die Umsetzung im Verfahrensschritt b) unter Zusatz mindestens einer Base erfolgt, welche ausgewählt ist aus: Triethylamin, Dimethylaminopyridin, Pyridin, Tributylamin;
und wobei als Lösungsmittel Acetonitril verwendet wird;
c) Zugabe eines Lösungsmittel oder eines Lösungsmittelgemisches, welches zumindest eines der Lösungsmittel umfasst ausgewählt aus: o-Xylol, Toluol, Methanol, Ethanol, Butanol, iso-Propanol zum Rohprodukt aus b), so dass ein Gemisch erhalten wird;
d) Erwärmen des Gemisches aus c), so dass sich das Rohprodukt löst und eine Lösung erhalten wird;
e) Abkühlen der Lösung aus d), wodurch die Verbindung gemäß der Formel (**I**) ausfällt;
f) Abfiltrieren der Verbindung gemäß der Formel (**I**).

2. Verfahren nach Anspruch 1,
wobei die Verfahrensschritte c) bis f) wiederholt werden.

3. Verfahren nach einem der Ansprüche 1 oder 2,
wobei das Abkühlen in Verfahrensschritt e) auf Raumtemperatur erfolgt.

4. Verfahren nach einem der Ansprüche 1 bis 3,
wobei in Verfahrensschritt c) als Lösungsmittel o-Xylol verwendet wird.

5. Verfahren nach einem der Ansprüche 1 bis 4,
wobei das Gemisch im Verfahrensschritt d) auf eine Temperatur im Bereich von 80 °C bis 140 °C erwärmt wird.

## Claims

1. Process for preparing a compound according to formula (**I**): 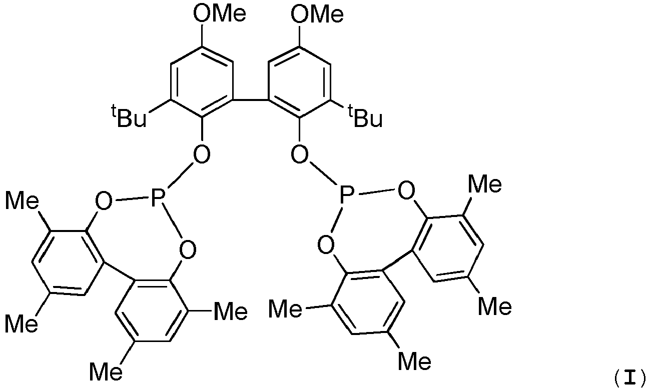 comprising the process steps of:
a) reacting 3,3',5,5'-tetramethyl-2,2'-dihydroxybiphenyl with PCl₃ in an inert gas atmosphere to give a phosphorochloridite derivative;
b) reacting at least 2 equivalents of the phosphorochloridite derivative from a) with 1 equivalent of 5,5'-dimethoxy-3,3'-di-tert-butyl-2,2'-dihydroxybiphenyl in an inert gas atmosphere to give a crude product;
wherein the reacting in process step b) is carried out in the presence of at least one base which is selected from: triethylamine, dimethylaminopyridine, pyridine, tributylamine;
and wherein acetonitrile is used as solvent;
c) adding to the crude product from b) a solvent or a solvent mixture comprising at least one solvent selected from the group consisting of: o-xylene, toluene, methanol, ethanol, butanol and isopropanol to obtain a mixture;
d) heating the mixture from c) to dissolve the crude product and obtain a solution;
e) cooling down the solution from d) to precipitate out the compound according to formula (**I**);
f) filtering-off the compound according to formula (**I**).

2. Process according to Claim 1
wherein process steps c) to f) are repeated.

3. Process according to either of Claims 1 and 2
wherein the cooling down in process step e) is cooling down to room temperature.

4. Process according to any of Claims 1 to 3
wherein o-xylene is used as solvent in process step c).

5. Process according to any of Claims 1 to 4
wherein the mixture is heated to a temperature in the range of from 80°C to 140°C in process step d).

## Revendications

1. Procédé pour la préparation d'un composé selon la formule (I) : 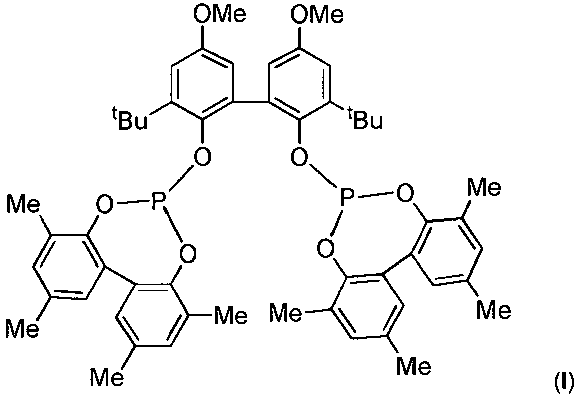 comprenant les étapes de procédé de :
a) transformation de 3,3',5,5'-tétraméthyl-2,2'-dihydroxybiphényle avec du PCl₃ en un dérivé de phosphorochloridite sous une atmosphère de gaz inerte ;
b) transformation d'au moins 2 équivalents du dérivé de phosphorochloridite de a) avec 1 équivalent de 5,5'-diméthoxy-3,3'-di-tert-butyl-2,2'-dihydroxybiphényle sous une atmosphère de gaz inerte en un produit brut ;
la transformation dans l'étape de procédé b) ayant lieu avec addition d'au moins une base, qui est choisie parmi : la triéthylamine, la diméthylaminopyridine, la pyridine, la tributylamine ; et de l'acétonitrile étant utilisé comme solvant ;
c) addition d'un solvant ou d'un mélange de solvants, qui comprend au moins un des solvants choisis parmi : l'o-xylène, le toluène, le méthanol, l'éthanol, le butanol, l'iso-propanol au produit brut de b), de manière à obtenir un mélange ;
d) chauffage du mélange de c), de manière telle que le produit brut se dissout et une solution est obtenue ;
e) refroidissement de la solution de d), suite à quoi le composé selon la formule (I) précipite ;
f) séparation par filtration du composé de formule (I).

2. Procédé selon la revendication 1, les étapes de procédé c) à f) étant répétées.

3. Procédé selon l'une quelconque des revendications 1 ou 2, le refroidissement dans l'étape de procédé e) ayant lieu jusqu'à la température ambiante.

4. Procédé selon l'une quelconque des revendications 1 à 3, de l'o-xylène étant utilisé comme solvant dans l'étape de procédé (c).

5. Procédé selon l'une quelconque des revendications 1 à 4, le mélange dans l'étape de procédé d) étant chauffé à une température dans la plage de 80°C à 140°C.
